# EUROPEAN PATENT APPLICATION

(11) **EP 1 251 459 A2**
(43) Date of publication of application: **23.10.2002**
(21) Application number: 02008192.3
(22) Date of filing: 16.04.2002
(51) Int. Cl.: G06N 3/12

(54) **Optimization system using genetic algorithm, control apparatus, optimization method, and program and storage medium therefor**

(30) Priority: 18.04.2001 JP 2001119130
(71) Applicant: FUJI JUKOGYO KABUSHIKI KAISHA, Tokyo (JP)
(72) Inventor: Torii, Tsuyoshi, Shinjuku-ku, Tokyo (JP); Matsuda, Kazuhiko, Shinjuku-ku, Tokyo (JP)
(74) Representative: VOSSIUS & PARTNER

(57) **Abstract**

For an optimization system, which employs a genetic algorithm to calculate an optimal parameter that matches an evaluation condition consisting of multiple conditions, multiple GA engines 1 are provided at multiple stages, from the lowermost to the topmost, and employ a genetic algorithm to output, as gene groups PGn (n = 1 to N), parameter candidates that match evaluation conditions that are individually set for the stages. Each of gene migration controllers 2 moves specific genes between a lower gene group PGn and a higher genre group PGn+1. A convergence determination unit 3 determines the convergence of an optimization based on a gene group PGN calculated by the GA engine 1 at the highest stage. In order to set the evaluation conditions for the stages, conditions are added stepwise from the lowermost to the topmost stage.

## Description

The present invention relates to an optimization system for using a genetic algorithm to obtain an optimal parameter for an optimization problem, and relates in particular to an optimization system for employing a stepwise evolution method to obtain an optimal parameter that matches an evaluation condition consisting of multiple conditions.

For various technical fields, requests exist for the quick and precise resolution of optimization problems. An optimization problem consists of the acquisition, from among multiple element combinations (parameter candidates), of a combination (an optimal parameter set) of optimal elements with which a desired objective can be achieved under a predetermined evaluation condition. An example optimization problem is one associated with how various circuits should be combined to constitute an electric circuit having a desired characteristic, one associated with how the operations of legs should be combined in order to most efficiently and naturally operate a walking robot, or one associated with how points making up a traffic network should be combined in order to optimize a goods delivery route.

Recently, attention has been drawn to a genetic algorithm (hereinafter referred to, as needed, as a "GA") as a method for a parameter search for an optimization problem. As the generation of a solution evolves, a genetic algorithm changes parameter candidates and performs a parameter search in accordance with a genetic rule that is present in the living world. A parameter candidate represents a combination of elements as an element array, like a chromosome complement. Then, an operation (a GA operator) similar to a chromosome operation, such as a cross-over and a mutation, is performed for the array, as needed, and the array is selected in accordance with its fitness (evolution of a generation). When this operation is repeated for a number of generations, from among an enormous number of variations of parameter candidates the parameter that most closely matches a condition and a target is obtained as an optimal parameter.

An optimization method using a genetic algorithm that is based on an unbalanced evolution theory is disclosed in

JP-A- 9-251446 as a conventional technique for a genetic algorithm. Specifically, according to this method, a group having a high mutation rate is separated from a group having a low mutation rate, and for each group, fission is employed to generate from a parent candidate a pair of child candidates. At this time, one child candidate is obtained by directly copying the parent candidate, and the constituents of the other child candidate become mutated based on either a high or low mutation rate. By repeating the evolution of generations, a set of optimal parameters having various phenotypes is generated for the group having a high mutation rate, and therefore, at the initial step of the generation evolution, an optimal parameter candidate having a comparatively high fitness can be quickly acquired. For the group having a low mutation rate, a set of similar optimal parameters is formed that are present around the periphery of the parent candidates that have been obtained that have the highest fitness. As a result, at the initial step, an efficient parameter search in global space and, at the mature step, a detailed vicinity search can be implemented at the same time.

Further, a conventional technique that applies a comparatively simple genetic algorithm for various types of controllers is disclosed in JP-A-10-63306 or JP-A-5-241639.

For most of the actual approaches employed for the resolution of an optimization problem, an optimal parameter is obtained that totallymatches an evaluation condition (a compound condition), consisting of multiple conditions, or a new condition is added, as needed, by referring to the optimization results or the control results. However, when a compound condition is provided at the same time at the initial optimization step, or when another evaluation condition is added to results that have already converged, it tends to be difficult for the conventional method to escape from a local minimum. Therefore, for an optimization problem concerning a complicated compound condition, a phenomenon (a so-called trap by a local minimum) occurs such that the calculation required for a parameter search is extremely slow, or is completely halted.

To resolve this shortcoming, it is one objective of the present invention to provide an optimization method using a genetic algorithm in order to reduce the probability of a trap by a local minimum.

It is another objective of the present invention to rapidly and efficiently calculate an optimal, high quality parameter by using the optimization method.

To achieve these objectives, according to a first aspect of the invention, an optimization system, which employs a genetic algorithm to calculate an optimal parameter that matches an evaluation condition consisting of multiple conditions, comprises:
multiple calculators, provided at multiple stages, from the lowermost to the topmost, for employing a genetic algorithm to output, as gene groups, parameter candidates that match evaluation conditions that are individually set for the stages;
controllers for moving specific genes between gene groups at a lower stage and at a higher stage; and
a determination unit for determining the convergence of an optimization based on a gene group calculated by the calculator at the highest stage,
wherein, in order to set the evaluation conditions for the stages, conditions are added stepwise from the lowermost to the topmost stage.

According to the first aspect, it is preferable that the evaluation condition consisting of multiple conditions be divided stepwise, so that the evaluation conditions can be set for the stages, and that a condition set at a lower stage have a greater constraining force than a condition set at a higher stage.

According to the first aspect of the invention, it is preferable that the controller permit adjacent calculators to exchange part of a gene group. It is particularly preferable that individual genes of each of the gene groups be evaluated based on a predetermined gene selection method, and that, of a specific gene group, a gene with a relatively high evaluation be moved to a gene group at a higher stage. In this case, while moving a gene to a higher stage, the controller may receive a gene from the higher stage and insert the received gene into the specific gene group.

For the moving of genes to a higher stage, it is preferable that the controller evaluate part of the gene group based on a predetermined gene selection method, and move a gene with a relatively low evaluation to a gene group at a lower stage. In this case, it is preferable that the controller, while moving a gene to a lower stage, receive a gene from a lower stage and insert the received gene into the gene group.

According to a second aspect of the invention, provided is a controller that employs the optimization system of the first aspect to calculate an optimal control parameter and to control a target based on the control parameter.

According to a third aspect of the invention, an optimization method, which employs a genetic algorithm to calculate an optimal parameter that matches an evaluation condition consisting of multiple conditions, comprises:
a first step of dividing, stepwise, the evaluation condition consisting of multiple evaluation conditions, of setting the evaluation condition for each stage from the lowermost to the topmost, and of employing a genetic algorithm to independently calculate, as gene groups, parameter candidates that match the evaluation condition at each of the stages;
a second step of moving specific genes between gene groups at a lower stage and a higher stage; and
a third step of determining the convergence of the optimization based on a gene group that matches the evaluation condition at the highest stage.

In the third aspect of the invention, it is preferable that a condition set at a lower stage have a greater constraining force than a condition set at a higher stage.

According to the third aspect of the invention, it is preferable that, at the second step, part of a gene group be exchanged by adjacent gene groups . It is particularly preferable that the optimization method further comprise a step of:
evaluating individual genes of each of the gene groups based on a predetermined gene selection method, and of moving, between specific gene groups, a gene awarded a relatively high evaluation value to a gene group at a higher stage. In this case, the second step may include a step of:
   while moving a gene to a higher stage, receiving a gene from the higher stage and inserting the received gene into the specific gene group.

According to the third aspect, the second step may include a step of:
evaluating genes of the gene group based on a predetermined gene selection method, and moving a gene with a relatively low evaluation value to a gene group at a lower stage. In this case, it is preferable that the second step include a step of:
   while moving a gene to a lower stage, receiving a gene from a lower stage, and inserting the received gene into the gene group.

According to a fourth aspect of the invention, provided is a program that is executed by a computer corresponding to a calculator at the lowest stage and that executes an optimization method, whereby an evaluation condition consisting of multiple conditions is divided stepwise, whereby the evaluation conditions thus obtained are set for calculators provided at stages so that stepwise the evaluation conditions can be added from the lowermost to the topmost stage, and whereby the calculators employ a genetic algorithm to independently calculate, as gene groups, parameter candidates that match the evaluation conditions at the stages, the optimization method comprising:
a first step of evaluating individual genes for each of the gene groups based on a predetermined gene selection method, and of moving, between specific gene groups, a gene awarded a relatively high evaluation value to a gene group at a higher stage; and
a second step of receiving a gene from the higher stage, and inserting the received gene into the specific gene group.

According to a fifth aspect of the invention, provided is a program that is executed by a computer corresponding to a calculator at the topmost stage and that executes an optimization method, whereby an evaluation condition consisting of multiple conditions is divided stepwise, whereby the evaluation conditions are set for calculators provided at stages so that stepwise the evaluation conditions can be added from the lowermost to the topmost stage, and whereby the calculators employ a genetic algorithm to independently calculate, as gene groups, parameter candidates that match the evaluation conditions at the stages, the optimization method comprising:
a third step of evaluating individual genes for each of the gene groups based on a predetermined gene selection method, and of moving, between specific gene groups, a gene with a relatively low evaluation value to a gene group at a lower stage; and
a fourth step of, while moving the gene to the lower stage, receiving a gene from the lower stage, and inserting the received gene into the specific gene group.

According to a sixth aspect of the invention, provided is a program that is executed by a computer corresponding to a calculator at the middle stage and that executes an optimization method, whereby an evaluation condition consisting of multiple conditions is divided stepwise, whereby the evaluation conditions thus obtained are set for calculators provided at stages so that stepwise the evaluation conditions can be added from the lowermost to the topmost stage, and whereby the calculators employ a genetic algorithm to independently calculate, as gene groups, parameter candidates that match the evaluation conditions at the stages, the optimization method comprising:
a first step of evaluating individual genes for each of the gene groups based on a predetermined gene selection method, and of moving, between specific gene groups, a gene with a relatively high evaluation value to a gene group at a higher stage;
a second step of receiving a gene from the higher stage, and inserting the received gene into the specific gene group;
a third step of evaluating individual genes for each of the gene groups based on a predetermined gene selection method, and of moving, between specific gene groups, a gene with a relatively low evaluation value to a gene group at a lower stage; and
a fourth step of, while moving the gene to the lower stage, receiving a gene from the lower stage, and inserting the received gene into the specific gene group.

According to one of the fourth to sixth aspects, it is preferable that a condition set at a lower stage have a greater constraining force than a condition set at a higher stage.

According to a seventh aspect of the invention, a computer-readable recording medium is provided on which a program according to one of the fourth to the sixth aspects is stored.

Fig. 1 is a block diagram showing the configuration of an optimization system.

Fig. 2 is a timing chart for the evolution of generations.

Fig. 3 is a flowchart showing the gene migration processing.

Figs. 4A and 4B are diagrams for explaining the relationship between the evolution generation and the optimization results.

Fig. 5 is a block diagram showing the configuration of a controller that incorporates an optimization apparatus.

Fig. 6 is a diagram for explaining a generated network for the walking pattern for one leg.

Fig. 7 is a specific diagram showing a lower space.

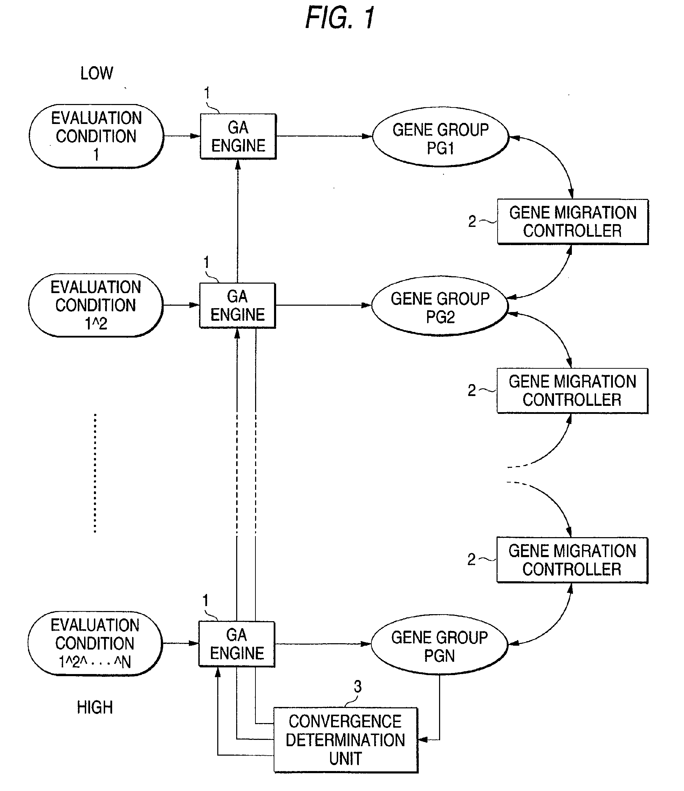

Fig. 1 is a block diagram showing the configuration of an optimization system according to a first embodiment of the present invention. The optimization system comprises N GA engines 1, (N-1) gene migration controllers 2, and a convergence determination unit 3, all of which constitute a distributed GA. The difference between this system and the common distributed GA is that the GA engines 1 are provided at multiple stages from the lowermost to the topmost, and, as will be described later, an evaluation condition to be set for each GA engine 1 is added stepwise from the lowermost to the topmost stage. The lowermost stage is defined as the first stage, succeeding stages are defined as the second, the third, ..., and the topmost stage is defined as the n-th stage. The gene migration controllers 2 are located between adjacent GA engines 1, and move, between the immediately adjacent stages, genes in a gene group PGn (n = 1 to N) to be optimized. The convergence determination unit 3 accompanies only the topmost GA engine 1, and determines the optimization convergence based on the gene group PGN output by the topmost GA engine 1.

The "topmost" stage is a target stage whereat an optimal parameter, which is the final target, may be included, i.e., a stage whereat all conditions are set that are finally to be provided. Therefore, the optimal parameter finally sought by an operator, i.e., a parameter that matches all the conditions that should be considered, is calculated by the topmost GA engine 1.

The evaluation condition set for the GA engine 1 at each stage is added from the lowermost to the topmost. Specifically, the evaluation condition for the first stage (the evaluation condition set for the GA engine 1 at the first stage) is only "condition 1", while the evaluation condition for the second stage is "condition 1^2 ("^" means "and"), which is a combination of the "condition 1" for the first stage and a new "condition 2". The evaluation condition at the third stage is "evaluation condition 1^2^3", which is a combination of the "evaluation condition 1^2" at the immediately preceding condition and a new "condition 3". That is, the evaluation condition 1^2^ ... ^N (final evaluation condition) that consists of multiple conditions is divided stepwise, and one of the resultant evaluation conditions is set for each stage, so that the conditions are added stepwise from the lowermost to the topmost stage. The number of conditions added at each stage is not necessarily one, and multiple conditions maybe added at the same time. For example, while the evaluation condition at the first stage may be defined as "condition 1", the evaluation condition at the second stage may be defined as "condition 1^2^3".

To add the conditions to the GA engines 1 stepwise, a condition having a greater constraining force is located at a lower stage, and a condition having a lower constraining force is located at a higher stage. In other words, a condition which is rather a necessary condition is located at a lower stage, and a condition which is rather a sufficient condition is located at a higher stage. When optimization for the movement of a walking robot is employed, the conditions that should be considered for the optimization are "the abdominal area does not touch the ground", "the robot does not fall", and " per step energy consumption is low". In this case, the condition having a greater constraining force, such as "the abdominal area does not touch the ground", corresponds to "condition 1" at the lowermost stage . The condition, "the robot does not fall", corresponds to a succeeding "condition 2", and the condition for the highest level, " per step energy consumption is low", corresponds to "condition N" at the topmost stage (the least constraining force).

When the optimization system is implemented by a standalone computer, a single CPU (Central Processing Unit) controls all of the functions of the N GA engines (calculators) 1, the (N-1) gene migration controllers 2 and the convergence determination unit 3. To increase the processing speed, a multi-processor computer or multiple computers connected by a network, such as a LAN, may be employed to carry out the optimization system. In this case, each CPU corresponds to a single GA engine 1 and a corresponding gene migration controller 2, and the CPUs that perform parallel processing exchange data (genes) across a network, such as a LAN, or via a bus or another interface. The CPU that corresponds to the topmost GA engine 1 serves as the convergence determination unit 3. Since GA engines 1 can be easily arranged in parallel because they perform GA calculations independently, the processing time required for optimization is reduced as the number of CPUs employed is increased. Further, a comparatively small amount of data is required when adjacent GA engines 1 exchange a single gene, and the occurrence frequency is also not high. Therefore, a fast special line need not always be employed as the gene exchange interface. Here, when a well known distributed GA is employed for a single GA engine 1 to perform more detailed and parallel processing, the processing speed can be further increased.

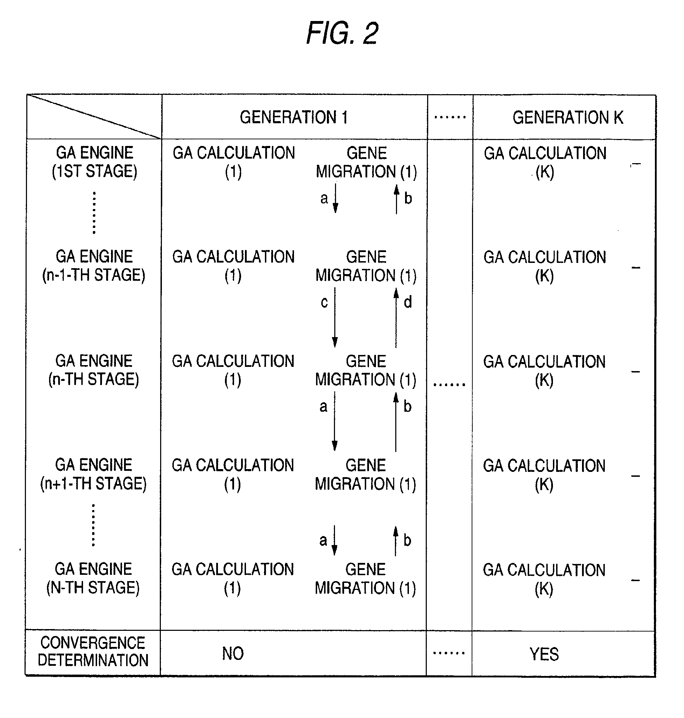

Fig. 2 is a timing chart showing the evolution of generations. One generation is formed of a "GA calculation phase" and a "gene migration phase", and the phases are repeated as the generation evolves. In the "GA calculation phase", the GA engines 1 at all the stages perform a parameter search at the same time and independently, in accordance with a well known genetic algorithm (GA). The GA engines 1 at the stages output, as a gene group PGn, parameter candidates that match the evaluation conditions that are individually set for the stages. Each gene of the gene group PGn is coded in accordance to a rule that is set as needed in accordance with the optimization problem. In order to obtain a variety of a gene, it is preferable that the initial setup of the gene group PGn at each stage be prepared at random for each GA engine 1. Either the same number of genes of the gene group PGn may be set for the GA engine 1 at each stage, or a different number of genes may be set.

In the "GA calculation phase", the convergence determination unit 3 always observes the gene group PGN obtained by the topmost GA engine 1, and determines whether optimization has been performed to satisfy the final evaluation condition "condition 1^2^ ... ^ N". Specifically, based on an evaluation function that is appropriately set so that a higher fitness is obtained for a gene that matches the "evaluation condition 1^2^ ... ^N", the individual genes of the topmost gene group PGN are evaluated. When the optimization for a specific generation K is satisfactory, an optimal parameter is output as the calculation result, and each GA engine 1 is instructed to terminate the GA calculation. Thus, the optimization calculation for the optimization system is terminated. And when the optimization in the "GA calculation phase" is not completed satisfactorily, the "GA calculation phase" is shifted to the "gene migration phase".

In the "gene migration phase", each of the gene migration controllers 2 moves part of a gene group PGn at a lower stage to a higher stage, and moves part of the gene group PGn at the higher stage to the lower stage. In this specification, the movement of genes between the gene groups PGn at the different stages is called "migration."

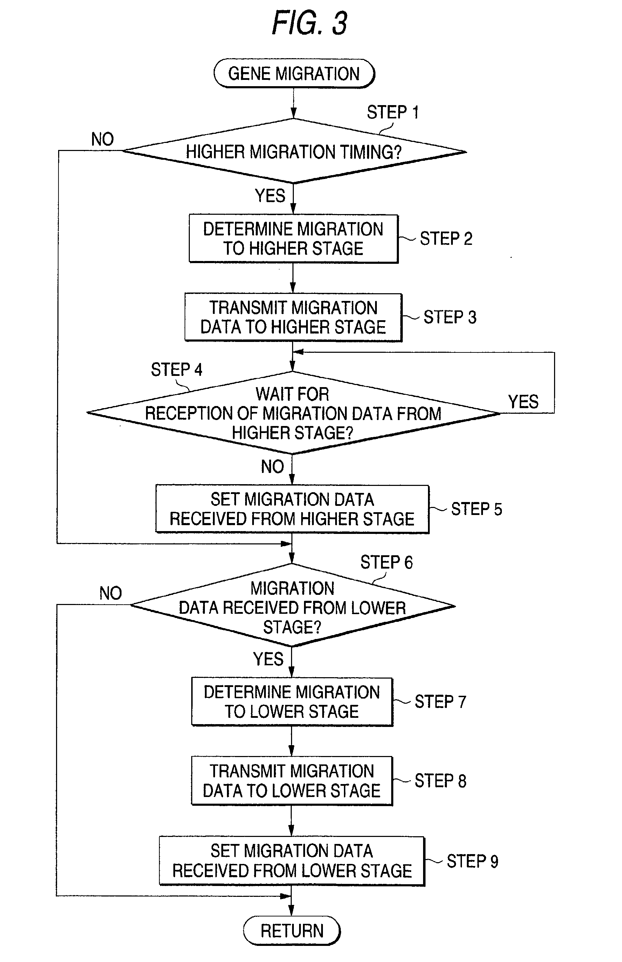

Fig. 3 is a flowchart showing the processing performed during gene migration. This processing is performed independently by the gene migration controllers 2, and an explanation will be given for the processing performed by the GA engine 1 at the n-th stage, which is the middle stage.

At step 1, a check is performed to determine whether a higher migration timing has been reached, i.e., the timing reached for the movement of a part of a gene group PGn at a stage to the immediately higher stage. This timing may be, for example, a fixed timing of every twenty generations, or may be determined by the selection of a constant rate at each generation. When it is ascertained at step 1 that the timing has not yet been reached, program control skips the higher migration process (steps 2 to 5) and advances to step 6. Since for the topmost stage GA engine 1, there is no GA engine 1 at a higher stage, the higher migration process (i.e., the upward migration moving process and the process for receiving migration data from a higher stage) is not performed.

At step 2, genes in an n-th gene group PGn that are to be moved to a higher stage, i.e., the migration of data to a higher stage, are determined. Specifically, the genes in the gene group are evaluated based on a predetermined gene selection method, and basically, from among the gene group, genes with relatively high evaluations are selected for migration or movement to the higher stage. A constant number of data are selected for migration, and the total number of genes in the gene group PGn is not changed during the evolution calculation. It is appropriate that the number of migrations should be determined at a ratio relative to the total number of genes. Generally, in a field of GA, several methods are used to select a gene having a high evaluation value, and based on a proper method, a migration to a higher stage is determined. According to these methods, a gene having a high evaluation value is not simply determined in accordance with the descending order, but is selected stochastically based on the need that a variety of a gene set is maintained. The typical selection method is a roulette selection method, a rank selection method or a tournament selection method. For a standard GA, these methods are employed to select a parent gene for the preparation of a gene for the next generation, and in this embodiment, the same selection method is employed.

At step 3, migration data associated with the migration to a higher stage are transmitted to the higher stage, i.e., the (n+1)-th stage. That is, the migration data determined at the n-th stage are transmitted to the (n+1)-th stage, as is indicated by an arrow a, and the n-th stage is set to the state wherein the reception of exchanged migration data is awaited (step 4). As is indicated by an arrow b in Fig. 2, when the migration data exchanged at the (n+1)-th stage are received at the n-th stage, the received migration data are inserted into the gene group at the n-th stage (step 5).

Then, at step 6, a check is performed to determine whether the migration data at the (n-1)-th stage are received at the immediately higher n-th stage. When the migration data are received (arrow c in Fig. 2), program control advances to step 7 and the lower migration process (steps 7 to 9) is performed. Since there is no GA engine 1 below the lowermost GA engine 1, the lower migration process (the process for moving migration data to a lower stage and the process for receiving migration data from a lower stage) is not performed.

At step 7, a gene to be moved to a lower stage, i.e., data migration to a lower stage, is selected from among those in the gene group PGn. Specifically, the genes in the gene group are evaluated based on a predetermined gene selection method, and basically, a gene having a low evaluation value is selected as migration data to be moved to a lower stage. The number of migration data to be moved to a lower stage is constant, and the total number of genes in the gene group PGn is not changed during the calculation of the evolution. Further, it is appropriate that, for the first time, the number of migrations be determined at a ratio relative to the total number of genes. A well known method, such as an inverse roulette selection method, an inverse rank selection method or an inverse tournament selection method, can be employed to determine the migration data to be moved to a lower stage, and the selection rate can be employed by inverting it relative to the evaluation value (so as to obtain a higher selection rate for a gene having a low evaluation value).

At step 8, as is indicated by an arrow d in Fig. 2, the migration data for migration to a lower stage are transferred from the n-th stage to the (n-1)-th stage, which is a lower stage. Instead of deleting genes as migration data, as is indicated by an arrow c in Fig. 2, the migration data received from the lower stage are inserted into the gene group PGn at the n-th stage (step 5).

Through this gene migration processing, the total number of genes in the gene group PGn at each stage is unchanged. The movement of migration data to a higher or lower stage is synchronously performed by the higher and lower gene groups, and the same number of genes are exchanged. As for a middle stage, the upward movement/downward movement do not occur at the same time; the movement of a gene to a higher stage is performed in synchronization with the gene group at the higher stage, and the movement of a gene to a lower stage is performed in synchronization with the gene group at the lower stage.

In the optimization system using the stepwise evolution method, the lowermost GA engine 1 performs a parameter search based only on the simplest evaluation condition 1, and outputs the gene group PG1. The GA engine 1 immediately above the lowermost GA engine 1 performs the parameter search based on the evaluation condition (1^2) obtained by adding new condition 2 to the condition 1, and outputs the gene group PG2. Similarly, conditions are added stepwise as the stages of the GA engine 1 ascend, and parameter searches based on more complicated evaluation conditions are attempted. At a predetermined timing, the gene migration controller 2 moves the determined number of genes (migration of data) from a gene group PGn to a higher gene group PGn+1 in order, beginning with the highest evaluation value (step-up). A higher GA engine 1, which has accepted the migration data, performs an evolution process beginning with genes which obtain a reasonable gene evaluation. Therefore, since the space wherein it is assumed that an optimal parameter should be present can be limited while conditions are added stepwise, the probability of finding an optimal parameter can be increased.

Further, at a predetermined timing, the gene migration controller 2 moves the determined number of genes from a gene group PGn to a lower gene group PGn-1 in order, beginning with the lowest evaluation value (step-down). Upon receiving the migration data, the lower GA engine 1 reattempts a parameter search based on an evaluation condition simpler than the preceding condition. This is because when a parameter search based on a compound condition is difficult, a new local minimum in the vicinity of the gene group PGn-1 should be quickly found, based on a simplified condition, and a gene should again be moved to the higher stage. The convergence determination unit at the topmost stage constantly observes the process to determine whether optimization has been satisfactory performed, and when the optimization is satisfactory, outputs the highest optimal parameter as the calculation results. The optimization calculation performed by the whole optimization system is thereafter terminated.

As is described above, since, in the evaluation environment wherein conditions are added stepwise, the optimization process is performed stepwise and parts of the gene groups PGn are mutually exchanged by adjacent stages, evaluation calculations consonant with the optimization levels of the gene groups PGn can be automatically and voluntarily performed. Furthermore, the parameter search for a gene group PGn at a higher stage is also efficiently performed, so that the biasing of genes can be avoided (the variety is maintained). Therefore, even when a result has been trapped by a local minimum, the probability of an escape from the local minimum is dramatically increased and the evolution progress is more continuous, so that a favorable parameter can be quickly calculated even when the evaluation condition is complicated.

Consider a case wherein it is difficult to approach a local minimum (optimal parameter) , although it is near, in the parameter space in a high stage whereat the compound level is increased (a case wherein an extra operation is required to reach the optimum parameter). In this embodiment, under the control of the gene migration controller 2, as a result, a retry loop is formed in which a gene that has been moved to a higher stage and can not be further evolved is moved to a lower stage, is slightly corrected at this lower stage, and is then moved again to the higher stage. In this retry loop, when the gene moved to a lower stage is slightly changed and is moved again to a higher stage, the angle of the approach is changed, and as a result, the probability can be increased whereat a parameter can be obtained while avoiding an extra operation.

In addition, according to the embodiment, as with other effects, variety can be maintained for a group. For a GA, the maintenance of variety is the only foundation required to guarantee a parameter search having a wide range. The migration of a gene that is generated or changed at a lower stage contributes greatly to the maintenance of variety within groups at higher stages.

Furthermore, when a condition having a greater constraining force is provided for a lower stage than is provided for a higher stage, a search for a final, optimal parameter can be efficiently performed. Generally, the space wherein a parameter that matches a specific condition is present tends to be extended as the constraining force of a provided condition is increased. Therefore, when a condition having a greater constraining force is added stepwise to a lower stage, and when a parameter search at a higher stage is performed while taking into account a global minimum obtained at a lower stage, it can be expected that the parameter search at the higher stage will be efficiently performed.

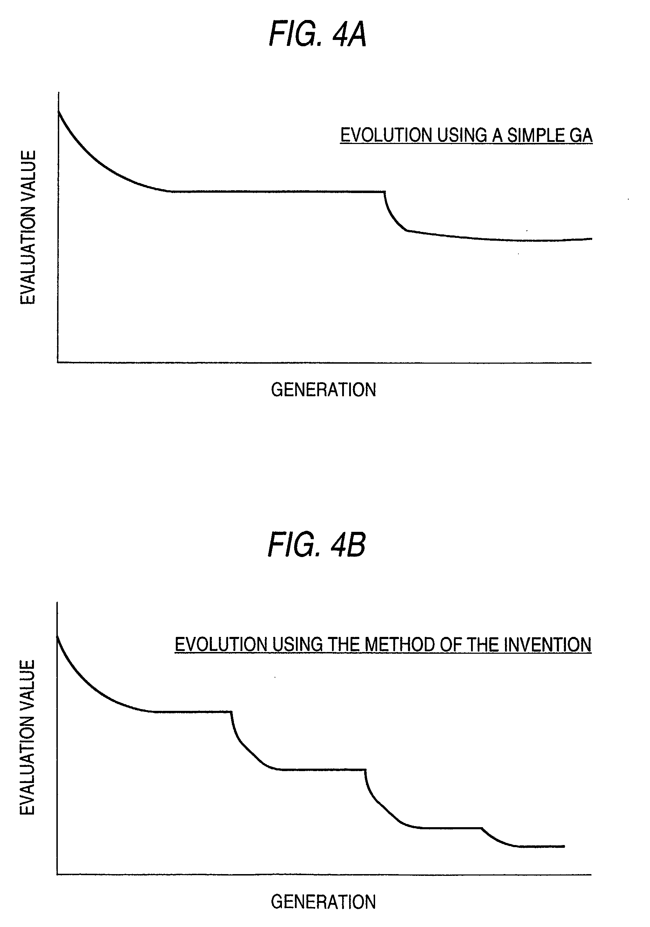

Figs. 4A and 4B are graphs for explaining the relationship between the evolution of the generation and the optimization results. Since the parameter space is dramatically extended as more complicated evaluation conditions consisting of multiple conditions are provided, the result obtained by the conventional simple GA tends to be trapped by a local minimum (see Fig. 4A). On the other hand, it is apparent from Fig. 4B that, in accordance with the optimization method of this embodiment, the evolution progress is continued and that a satisfactory optimal parameter can be obtained without being trapped by a local minimum.

Further, when an operator desires to add (insert), as needed, a new evaluation condition, while referring to the optimization results, the optimization system in this embodiment need only add another GA engine 1 for which an additional evaluation condition is provided. The position whereat the GA engine 1 is inserted is determined based on the strength of the constraining force that is related to the newly added evaluation condition. That is, when the constraining force of the condition to be added is great, it is preferable that the GA engine 1 be added to a lower stage, and when the constraining force of the new condition to be added is low, it is preferable that the GA engine 1 be added to a higher stage. Therefore, a system providing excellent usability can be implemented that matches the actual approach employed for a parameter search used to resolve the optimization problem, and the work of an operator can be simplified and efficiently performed.

In addition, a new condition may be added to a GA engine 1 located above a GA engine 1 that has been inserted. In this case, it is expected that the speed for the convergence at a parameter will be increased.

In this embodiment, an explanation has been given for an example wherein genes are moved between the immediately adjacent gene groups PGN and PGn+1 (or PGN and PGn-1). However, the present invention is not thus limited. The present invention can be applied for the movement of a gene while skipping a stage, such as when movements are made to every other stage, and this migration form is also included within the scope of the invention.

Further, in this embodiment, an explanation has also been given for an example wherein the migrations are exchanged by adjacent gene groups. However, when the processing speed is more important than an improvement in the precision of the optimal parameter through the use of a retry loop, a step-up process may be independently performed without a step-down process being required. It should be noted that a step-down process is useless when it is independently performed, and must be performed together with a step-up process.

A storage medium on which a computer program is stored that implements the optimization method using the stepwise evolution method may be supplied to a computer. In this case, the objective of the present invention is achieved when the computer reads the computer program from the storage medium and executes it. Since the computer program read from the storage medium carries out the innovative functions of the invention, the storage medium on which the computer program is recorded constitutes this invention. An example recording medium to be used for the recording of a computer program can be a CD-ROM, a floppy disk, a hard disk, a memory card, an optical disk, a DVD-ROM or a DVD-RAM. Further, the computer program that carries out the functions of the embodiment also includes those innovative functions by which the objective of the invention is achieved.

### (Second Embodiment)

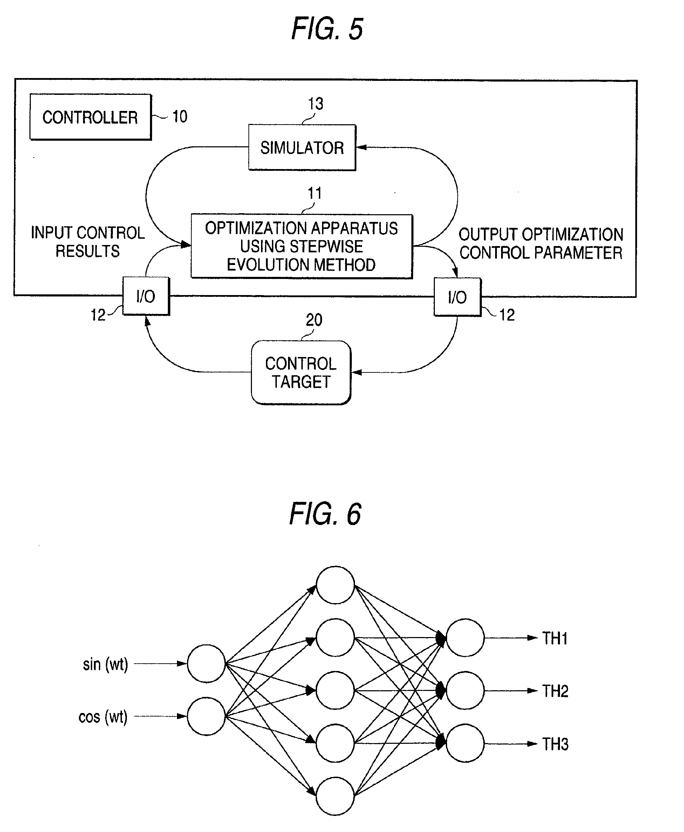

Fig. 5 is a block diagram showing the configuration of a controller that incorporates an optimization apparatus that is based on the stepwise evolution method. A controller 10 comprises an optimization apparatus 11, which implements the optimization method of the invention, an I/O unit 12, and a simulator 13 for simulating a control target 20.

The optimization apparatus 11 calculates an optimal control parameter for driving or controlling the control target 20, and employs the control parameter to control the target 20 via the I/O unit 12. Further, the optimization apparatus 11 performs a re-evaluation based on the control results obtained via the I/O unit 12, and continues the optimization operation. If the control target 20 should be destroyed by being directly controlled, or if an extended time is required to obtain the control results, the simulator 13 is employed to perform an evaluation.

An explanation will now be given for a case wherein a four-legged walking robot is employed as an example control target 20 and the walking pattern is automatically generated. A feed forward neural network using a sigmoid function shown in Fig. 6 is employed to generate the angle of each joint for one cycle that is called a walk pattern. In this case, w denotes a walking cycle, t denotes an elapsed time, and TH1 to TH3 denote the joint angles of the walking robot. The connection weight coefficient of the neural network is adjusted using the stepwise evolution method, and an optimal walk pattern is generated.

For evaluating the walk pattern, various evaluation conditions can be employed, including a condition having a great constraining force, such as "the abdominal area does not touch the ground" or "the robot does not fall" and a condition having a small constraining force, such as "the walking distance is far", "consumption energy is small" or "the size of a triangle formed by grounded feet is small". The evaluation conditions are allocated to the GA engines 1 in Fig. 1, so that the condition having the greatest constraining force is provided for a lower stage.

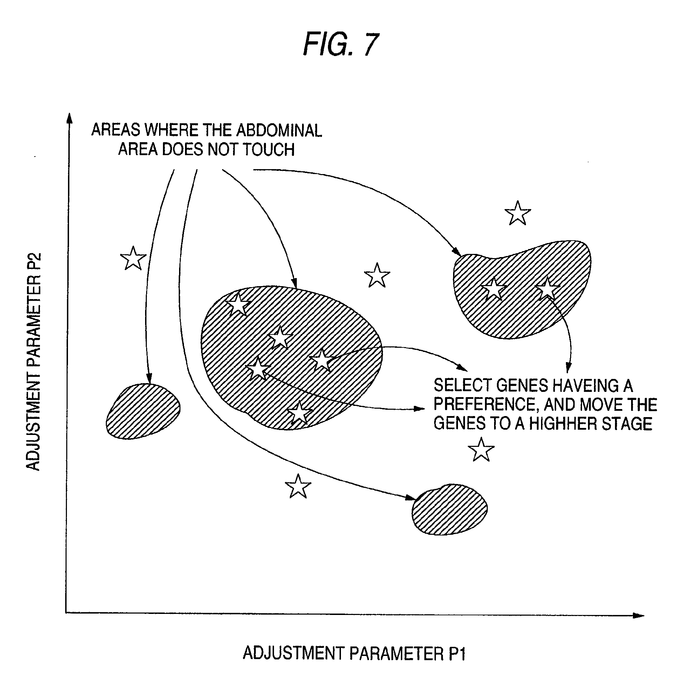

Fig. 7 is a specific diagram showing the lower space (space defined by adjustment parameters P1 and P2) defined when the evaluation condition "the abdominal area does not touch the ground" is allocated to the lowermost stage. Several local minima for "the abdominal area does not touch the ground" are calculated through the evolution by the GA. Multiple local minima are present in the lower space, and may be located at non-related positions. The gene near the local minima is efficiently selected, and migrates to the higher stage for which the evaluation condition "the abdominal area does not touch ^ the robot does not fall" is provided. At the higher stage, since the evolution of the gene awarded a satisfactory evaluation can be performed for the condition "the abdominal area does not touch the ground", the probability the optimal parameter will be found can be increased.

In addition, a gene with a low evaluation value is accepted from the higher stage, and the parameter search is again performed under only the simple condition "the abdominal area does not touch the ground" . As the reason for this process, as is described above, when a parameter search under a compound condition is difficult, the conditions are united and simplified so as to quickly find a new local minimum in the vicinity of the pertinent gene and to again move the gene to the higher stage.

### [Advantages Of The Invention]

According to the present invention, by using the genetic algorithm, a parameter search is independently performed for multiple stages, and at a predetermined timing, part of a gene group is moved between higher and lower stages. As a result, an evolution calculation consonant with the optimization level of the gene can be automatically and voluntarily performed. Further, the parameter search for the gene group is performed efficiently, and the biasing of the gene can be avoided. As a result, the probability of trapping by the local minimum is lowered, and the evolution progresses more continuously, so that a satisfactory parameter can be quickly calculated.

## Claims

1. An optimization system, which employs a genetic algorithm to calculate an optimal parameter that matches an evaluation condition consisting of multiple conditions, comprising:
multiple calculators, provided at multiple stages, from the lowermost to the topmost, for employing a genetic algorithm to output, as gene groups, parameter candidates that match evaluation conditions that are individually set for said stages;
controllers for moving specific genes between gene groups at a lower stage and at a higher stage; and
a determination unit for determining the convergence of an optimization based on a gene group calculated by the calculator at the highest stage,
wherein, in order to set said evaluation conditions for said stages, conditions are added stepwise from the lowermost to the topmost stage.

2. An optimization system according to claim 1, wherein said evaluation condition consisting of multiple conditions is divided stepwise, so that said evaluation conditions can be set for said stages; and wherein a condition set at a lower stage has a greater constraining force than a condition set at a higher stage.

3. An optimization system according to claim 1 or 2, wherein said controller permits adjacent calculators to exchange part of a gene group.

4. An optimization system according to claim 1 or 2, wherein the individual genes of each of said gene groups are evaluated based on a predetermined gene selection method; and wherein, of a specific gene group, a gene with a relatively high evaluation is moved to a gene group at a higher stage.

5. An optimization system according to claim 4, wherein, while moving a gene to a higher stage, said controller receives a gene from said higher stage and inserts said received gene into said specific gene group.

6. An optimization system according to claim 4 or 5, wherein said controller evaluates part of said gene group based on a predetermined gene selection method, and moves a gene with a relatively low evaluation to a gene group at a lower stage.

7. An optimization system according to claim 6, wherein, while moving a gene to a lower stage, said controller receives a gene from a lower stage and inserts said received gene into said gene group.

8. A controller that employs an optimization system according to one of claims 1 to 7 to calculate an optimal control parameter and to control a target based on said control parameter.

9. An optimization method, which employs a genetic algorithm to calculate an optimal parameter that matches an evaluation condition consisting of multiple conditions, comprising:
a first step of dividing, stepwise, said evaluation condition consisting of multiple evaluation conditions, of setting said evaluation condition for each stage from the lowermost to the topmost, and of employing a genetic algorithm to independently calculate, as gene groups, parameter candidates that match said evaluation condition at each of said stages;
a second step of moving specific genes between gene groups at a lower stage and a higher stage; and
a third step of determining the convergence of the optimization based on a gene group that matches the evaluation condition at the highest stage.

10. An optimization method according to claim 9, wherein a condition set at a lower stage has a greater constraining force than a condition set at a higher stage.

11. An optimization method according to claim 9 or 10, wherein, at said second step, part of a gene group is exchanged by adjacent gene groups.

12. An optimization method according to claim 9 or 10, wherein the optimization method further comprises a step of:
evaluating individual genes of each of said gene groups based on a predetermined gene selection method, and moving, between specific gene groups, a gene with a relatively high evaluation value to a gene group at a higher stage.

13. An optimization method according to claim 12, wherein said second step includes a step of:
while moving a gene to a higher stage, receiving a gene from said higher stage and inserting said received gene into said specific gene group.

14. An optimization method according to claim 12 or 13, wherein said second step includes a step of:
evaluating genes of said gene group based on a predetermined gene selection method, and moving a gene with a relatively low evaluation value to a gene group at a lower stage.

15. An optimization method according to claim 14, wherein said second step includes a step of:
while moving a gene to a lower stage, receiving a gene from a lower stage, and inserting said received gene into said gene group.

16. A program that is executed by a computer corresponding to a calculator at the lowest stage and that executes an optimization method, whereby an evaluation condition consisting of multiple conditions is divided stepwise, whereby the thus obtained evaluation conditions are set for calculators provided at stages so that stepwise said evaluation conditions can be added from the lowermost to the topmost stage, and whereby said calculators employ a genetic algorithm to independently calculate, as gene groups, parameter candidates that match said evaluation conditions at said stages, said optimization method comprising:
a first step of evaluating individual genes for each of said gene groups based on a predetermined gene selection method, and of moving, between specific gene groups, a gene awarded a relatively high evaluation value to a gene group at a higher stage; and
a second step of receiving a gene from said higher stage, and inserting said received gene into said specific gene group.

17. A program that is executed by a computer corresponding to a calculator at the topmost stage and that executes an optimization method, whereby an evaluation condition consisting of multiple conditions is divided stepwise, whereby the thus obtained evaluation conditions are set for calculators provided at stages so that stepwise said evaluation conditions can be added from the lowermost to the topmost stage, and whereby said calculators employ a genetic algorithm to independently calculate, as gene groups, parameter candidates that match said evaluation conditions at said stages, said optimization method comprising:
a third step of evaluating individual genes for each of said gene groups based on a predetermined gene selection method, and of moving, between specific gene groups, a gene awarded a relatively low evaluation value to a gene group at a lower stage; and
a fourth step of, while moving said gene to said lower stage, receiving a gene from said lower stage, and inserting said received gene into said specific gene group.

18. A program that is executed by a computer corresponding to a calculator at the middle stage and that executes an optimization method, whereby an evaluation condition consisting of multiple conditions is divided stepwise, whereby the thus obtained evaluation conditions are set for calculators provided at stages so that stepwise said evaluation conditions can be added from the lowermost to the topmost stage, and whereby said calculators employ a genetic algorithm to independently calculate, as gene groups, parameter candidates that match said evaluation conditions at said stages, said optimization method comprising:
a first step of evaluating individual genes for each of said gene groups based on a predetermined gene selection method, and of moving, between specific gene groups, a gene with a relatively high evaluation value to a gene group at a higher stage;
a second step of receiving a gene from said higher stage, and inserting said received gene into said specific gene group;
a third step of evaluating individual genes for each of said gene groups based on a predetermined gene selection method, and of moving, between specific gene groups, a gene with a relatively low evaluation value to a gene group at a lower stage; and
a fourth step of, while moving said gene to said lower stage, receiving a gene from said lower stage, and inserting said received gene into said specific gene group.

19. A program according to one of claims 16, 17 and 18, wherein a condition set at a lower stage has a greater constraining force than a condition set at a higher stage.

20. A computer-readable recording medium on which a program according to one of claims 16, 17 and 18 is stored.

21. An optimization apparatus according to one of claims 1 to 7, wherein, when a new evaluation condition is to be added, a new calculator is inserted into an appropriate position among said multiple calculators; and wherein said evaluation condition set for said new calculator includes said new evaluation condition.

22. An optimization apparatus according to claim 21, wherein said new calculator includes an evaluation condition set for a calculator lower than said new calculator.

23. An optimization system according to claim 21 or 22, wherein, when said new evaluation condition is to be added for said new calculator, said new evaluation condition is also added to a calculator higher than said new calculator.
